# EUROPÄISCHE PATENTSCHRIFT

(11) **EP 3 424 679 B1**
(45) Veröffentlichungstag und Bekanntmachung des Hinweises auf die Patenterteilung: **28.07.2021**
(21) Anmeldenummer: 18177318.5
(22) Anmeldetag: 12.06.2018
(51) Int. Cl.: B29C 48/691, B29C 48/92, B29C 48/27, B29C 48/76, B29C 48/25

(54) **FILTRIERVORRICHTUNG UND VERFAHREN ZUM BETREIBEN DERSELBEN**
FILTERING DEVICE AND METHOD FOR OPERATING THE SAME
DISPOSITIF FILTRANT ET SON PROCÉDÉ DE FONCTIONNEMENT

(30) Priorität: 07.07.2017 DE 102017115295
(43) Veröffentlichungstag der Anmeldung: 09.01.2019
(73) Patentinhaber: NORDSON CORPORATION, Westlake, OH 44145-1119 (US)
(72) Erfinder: Wöstmann, Stefan, 48336 Sassenberg (Füchtorf) (DE); Walbersmann, Markus, 48624 Schöppingen (DE); Middler, Robert, 48329 Havixbeck (DE)
(74) Vertreter: Eisenführ Speiser

(56) Entgegenhaltungen:
- WO-A1-2010/138602
- AT-B- 413 654
- CN-A- 102 343 658
- DE-A1-102005 037 268
- JP-A- 2012 218 403
- US-A- 4 701 118

## Beschreibung

Die Erfindung betrifft eine Filtriervorrichtung zum Filtrieren eines Fluides, insbesondere eines verflüssigten Kunststoffes, umfassend ein Gehäuse mit einer Aufnahme zur Aufnahme eines Siebträgers und mit einem Fluideintrittskanal und einem Fluidaustrittskanal, einen innerhalb der Siebträger-Aufnahme bewegbaren Siebträger mit mindestens einer Kavität zur Aufnahme einer Siebstützplatte mit einem Filterelement, wobei der Siebträger aus einer Filtrierstellung in eine Siebwechselstellung bewegbar ist, wobei der Siebträger und/oder die Aufnahme mindestens eine Füllaussparung zum Befüllen der Kavität mit Fluid aufweist, die in Abhängigkeit von der Position des Siebträgers in der Aufnahme einen unterschiedlich großen Strömungsquerschnitt zum Einleiten von Fluid aus dem Fluideintrittskanal oder dem Fluidaustrittskanal in der Kavität freigibt, wobei der Siebträger mindestens eine Entlüftungsaussparung zur Abgabe der sich in der Kavität befindlichen Luft während des Füllens aufweist.

Die Erfindung betrifft ferner ein Verfahren zum Betreiben einer Filtriervorrichtung zum Filtrieren eines Fluids. Filtriervorrichtungen werden beispielsweise in kunststoffverarbeitenden Maschinen eingesetzt, wenn hohe Anforderungen an die Reinheit des zu verarbeitenden Kunststoffs gestellt werden. Sie werden typischerweise zwischen einer Extrusionsvorrichtung, die den Kunststoff schmelzt und fördert, und einer Applikationsvorrichtung angeordnet. Derartige Filtriervorrichtungen zum Filtrieren eines Fluids, insbesondere eines verflüssigten Kunststoffes, sowie Verfahren sind im Stand der Technik bekannt. Beispielsweise beschreibt die DE 10 2007 057 816 A1 eine solche Filtriervorrichtung mit einem Siebträger, auf dem ein Sieb angeordnet ist.

Nach einiger Zeit im Betrieb ist ein solches Sieb typischerweise auszutauschen oder zu reinigen. In einem solchen Fall wird der Siebträger aus der Produktionsstellung (Filtrierstellung) in eine Siebwechselstellung gebracht. Nach dem Siebwechsel ist der Siebträger wieder in den Produktionsprozess einzubringen.

Hierbei ergibt sich die Herausforderung, dass typischerweise die Innenräume des Siebträgers (Kavität) mit Luft gefüllt sind und ein Einbringen von Luft in den Kunststoff-Fluidstrom unbedingt zu vermeiden ist.

Aus diesem Grund wird der Siebträger nach einem Siebwechsel zunächst in eine Entlüftungsposition verfahren. In der Entlüftungsposition strömt verflüssigter Kunststoff in die Siebkavität ein und verdrängt damit die enthaltene Luft aus der Siebkavität. Mit Hilfe einer Füllaussparung oder sog. Vorflut-Nut lässt sich die Befüllgeschwindigkeit der Kavität regulieren. Erst nach der vollständigen Füllung der Siebkavität mit verflüssigtem Kunststoff kann der Siebträger wieder in seine Filtrierposition verfahren werden. Aus dem Stand der Technik sind neben Siebträgern, die eine einzige Kavität aufweisen auch solche bekannt, die mehrere Kavitäten aufweisen, beispielsweise zwei oder vier Kavitäten, welche beispielsweise beabstandet zueinander entlang einer Siebträger-Längsachse angeordnet sein können.

Da der einströmende Kunststoff aus dem zu filtrierenden Kunststoff-Fluidstrom entnommen wird, besteht eine besondere Herausforderung im Hinblick auf das Befüllen der Kavität darin, dass sich ein zu schnelles Befüllen derselben aus dem Kunststoff-Fluidstrom negativ auf den Systemdruck auswirkt. Somit bewirkt ein zu schnelles Befüllen bei konstanter Fluid-Förderleistung einen unerwünschten Druckabfall im System.

Aus dieser Motivation heraus beschreibt DE 10 2006 019 445 A1 ein Verfahren zur Steuerung einer kunststoffverarbeitenden Anlage. Das Verfahren verfolgt das Ziel, Druckänderungen, die sich durch das Befüllen einer Siebträgerkavität, wie oben beschrieben, ergeben, mittels Erhöhung der Fördermenge einer Fördereinrichtung durch Drehzahlregelung einer Zahnradpumpe bei gleichzeitiger Verfahrung eines Siebträgers auszugleichen.

Nachteilig bei diesem beschriebenen Stand der Technik wirkt sich die regelungsbedingte Verzögerungszeit zwischen Systemdruckabfall durch das Befüllen der Kavität und der Nachregelung der Pumpleistung aus. In der Folge ist das Auftreten von Druckschwankungen, insbesondere bei einem zu schnellen Befüllen der Kavität, nicht hinreichend sicher auszuschließen. Außerdem trägt eine solche Regelung der Pumpleistung in Abhängigkeit vom Siebwechselvorgang zu einer Erhöhung der Komplexität der kunststoffverarbeitenden Maschine insgesamt bei, womit die Herstellungskosten und der Wartungsaufwand im Hinblick auf eine solche Maschine steigen. Die Druckschriften JP 2012 218403 A, DE 10 2005 037268 A1, US 4 701 118 A und WO 2010/138602 A1 offenbaren weitere Filtriervorrichtungen für Kunststoffschmelze. Vor diesem Hintergrund lag der Erfindung die Aufgabe zugrunde, eine Vorrichtung und ein Verfahren der eingangs bezeichneten Art dahingehend weiterzubilden, dass die im Stand der Technik aufgefundenen Nachteile möglichst weitgehend behoben werden. Der Erfindung lag insbesondere die Aufgabe zugrunde, eine Vorrichtung und ein Verfahren anzugeben, welche einen Siebwechselvorgang, insbesondere bei häufigen Material- und Rezepturwechseln, ermöglichen, wobei der Gesamtsystemdruck weitestgehend konstant gehalten wird und wobei die Systemkomplexität insgesamt verringert wird.

Erfindungsgemäß wird die Aufgabe bei der Vorrichtung der eingangs genannten Art gemäß eines ersten Aspekts durch eine Steuerungseinrichtung gelöst, die derart eingerichtet und ausgebildet ist, dass diese die Position des Siebträgers mittels Steuerungssignalen stufenweise und wiederholend oder kontinuierlich verändert (Anspruch 1).

Mittels der erfindungsgemäßen Steuerungseinrichtung lässt sich die Position des Siebträgers so verändern, dass der effektive freie Strömungsquerschnitt zum Befüllen der Siebträger-Kavität so gewählt wird, dass Druckschwankungen im Fluideintrittskanal oder Fluidaustrittskanal verringert, minimiert oder ganz verhindert werden. Auch wenn im Folgenden auf eine Siebträger-Kavität Bezug genommen wird, so sollen hier auch solche Siebträger miteinbezogen werden, die mehrere Kavitäten, etwa zwei oder vier Kavitäten, aufweisen.

Eine solche stufenweise und wiederholend oder kontinuierlich vorgenommene Änderung der Position des Siebträgers stellt eine rasch wirksame und effiziente Maßnahme zur Erhaltung des Gesamtsystemdrucks bei Siebwechselvorgängen innerhalb vordefinierbarer Grenzen dar. Eine Anpassung der Pumpleistung einer Schmelze - Pumpe, beispielsweise durch Änderung der Drehzahl des Antriebs der Pumpe, entfällt vorzugsweise. Eine erfindungsgemäße stufenweise und wiederholende oder kontinuierliche Regelung wirkt vorteilhaft auf die Ursache der Druckschwankung, nämlich die Befüllgeschwindigkeit der Kavität, die über die Position des Siebträgers beeinflusst wird. Der freie Strömungsquerschnitt zum Befüllen der Kavität lässt sich so sehr genau justieren und derart variieren , dass nur sehr geringe, vernachlässigbare Auswirkungen auf den Fluiddruck im System entstehen. Somit können Abweichungen vom Sollsystemdruck, die zulässige Grenzwerte überschreiten, schnell durch Reduzierung der Befüllgeschwindigkeit der Kavität mittels Verfahren des Siebträgers ausgeglichen werden. Es wird somit vorteilhaft direkt auf die Ursache für den Druckabfall Einfluss genommen. Durch Verfahren des Siebträgers kann der einströmende Querschnitt zur Kavität ohne Zeitverzögerung und genau und vorsichtig, stufenweise und wiederholend oder kontinuierlich, eingestellt werden, die Befüllung kann in Abhängigkeit vom Druck im System langsam erfolgen. Eine nachteilhafte Anpassung der Fluid-Pumpenleistung wird erfindungsgemäß vermieden. Darüber hinaus lassen sich unter Verwendung einer solchen Steuerungseinrichtung wiederholbare Siebwechselvorgänge realisieren. Hierdurch steigt insgesamt die Verfahrensqualität und es wird weiterhin das Risiko minimiert, Lufteinschlüsse in dem Fluid durch den Siebwechselvorgang zu generieren.

Der Fluiddruck im Fluideintrittskanal und/oder im Fluidaustrittskanal verbleibt während des Füllens der Kavität innerhalb definierbarer Druckbereiche, wobei mindestens ein Drucksensor zum Messung des Fluiddrucks im Fluideintrittskanal und/oder im Fluidaustrittskanal vorgesehen ist.

Die Erfindung wird dadurch weitergebildet, dass die Steuerungseinrichtung derart eingerichtet und ausgebildet ist, dass diese die Position und die Vorschubgeschwindigkeit des Siebträgers mittels Steuerungssignalen so stufenweise und wiederholend verändert oder kontinuierlich verändert, dass der Fluiddruck im Fluideintrittskanal und/oder im Fluidaustrittskanal während des Füllens der Kavität innerhalb definierbarer Druckbereiche verbleibt. Bei dieser bevorzugten Ausführungsform wird vorteilhaft insbesondere auf die Vorschubgeschwindigkeit des Siebträgers Einfluss genommen und diese so gewählt, dass sich die Siebträger-Kavität so langsam füllt, dass der Fluiddruck im Fluideintrittskanal und/oder im Fluidaustrittskanal während des Füllens der Kavität innerhalb definierbarer Druckbereiche verbleibt ohne dass eine Drucküberwachung zwingend erforderlich ist. Das Vorschieben des Siebträgers kann bevorzugt stufenweise und wiederholend oder kontinuierlich erfolgen. Die Alternativlösung macht sich die Erkenntnis zunutze, dass ein sehr langsames Vorschieben des Siebträgers auch ohne Drucküberwachung sicherstellen kann, dass der Fluiddruck im Fluideintrittskanal und/oder im Fluidaustrittskanal während des Füllens der Kavität innerhalb definierbarer Druckbereiche verbleibt.

Die Erfindung wird dadurch weitergebildet, dass der Siebträger als Siebbolzen ausgebildet ist, stufenweise, d.h. um eine bestimmte, immer wieder anpassbare Strecke, axial innerhalb der Aufnahme bewegbar ist, und die Füllaussparung im Wesentlichen parallel zur Längsachse des Siebbolzens verläuft.

Die Ausbildung des Siebträgers als Siebbolzen ermöglicht eine vereinfachte Handhabbarkeit und ein vereinfachtes Einbringen eines solchen Siebbolzens in das Gehäuse. Ferner wird der Siebwechsel erleichtert. Die parallel zur Längsachse des Siebbolzens angeordnete Füllaussparung lässt sich drüber hinaus fertigungstechnisch besonders einfach realisieren. Ferner ist über die Axialbewegung des Siebbolzens eine wohldosierte Steuerung des eintretenden Fluidmassenstroms beim Befüllvorgang der Kavität realisierbar.

Weiterhin bevorzugt ist die Füllaussparung als eine Nut (auch Vorflut-Nut genannt) ausgebildet, die in Richtung der Längsachse eine Querschnittsveränderung aufweist und/oder einen im Wesentlichen dreieckigen Querschnitt.

Eine solche Querschnittsveränderung der Nut, insbesondere in Form eines dreieckigen Querschnitts, unterstützt weiterhin ein wohldosiertes und fein steuerbares Einströmen des Fluides in die Kavität während des Füllvorgangs. Eine derartige Ausgestaltung ist darüber hinaus im Hinblick auf die Verwendung unterschiedlicher Fluide vorteilhaft, da je nach Eigenschaft des Fluides, beispielsweise im Hinblick auf deren Viskosität, eine optimale Entlüftungsaussparungsfläche gewählt werden kann und die Kavität so mit optimalem Massenstrom befüllt werden kann, mit dem Ziel, dass der Systemdruck innerhalb bestimmter Grenzwerte verbleibt und möglichst gar nicht oder nur in sehr geringem Ausmaß beeinflusst wird durch die Befüllung der Kavität.

Gemäß einer bevorzugten Weiterbildung wird der Siebträger von einer Antriebseinrichtung angetrieben, die als elektrischer Antrieb, insbesondere als Linearmotor oder Schrittmotor ausgebildet ist.

Ein solcher Antrieb, insbesondere der elektrische Antrieb mittels Linearmotor oder Schrittmotor, ermöglicht ein präzises Antreiben des Siebträgers, wobei ein exaktes Anfahren von gewünschten Positionen, beispielsweise einer Entlüftungsposition, des Siebträgers ermöglicht wird.

Die Erfindung wird ferner dadurch weitergebildet, dass der Siebträger einen Positionssensor zur Bestimmung der Siebträgerposition aufweist, der vorzugsweise als Transsonar-Wegaufnehmer ausgebildet ist. Ein solcher Sensor bringt den Vorteil mit sich, dass die exakte Position des Siebträgers ermittelt werden kann und an die Steuerungseinrichtung rückgeführt werden kann. Hierdurch wird eine Überwachungsfunktionalität realisiert und somit die Verfahrensqualität insgesamt verbessert.

Die Filtriervorrichtung ist ferner derart ausgebildet, dass die Steuerungseinrichtung einen Daten - Speicher aufweist und aus gespeicherten Sensordaten vergangener Füllvorgänge Regelungsparameter anpasst, insbesondere bezüglich Befüllpositionen und Vorschubgeschwindigkeiten des Siebträgers und/oder Füllzeiten der Kavität.

Eine solche Selbstlernfunktionalität dient erneut der Erhöhung der Verfahrensqualität und einer Reduktion der Siebwechselzeit. Ferner dient eine solche Funktionalität dazu, die Verwendung unterschiedlicher Fluide zu erleichtern. Der Bediener wird ferner von umfangreichen Aufzeichnungs- und Berechnungsarbeiten entlastet.

Die Erfindung wird dadurch weitergebildet, dass die Steuerungseinrichtung eine Benutzerschnittstelle aufweist, die als Steuerungspult und/oder als berührungsempfindliches Display ausgebildet ist.

Eine solche Ausgestaltung der Benutzerschnittstelle bringt den Vorteil mit sich, dass Informationen intuitiver zu erfassen sind, und Eingaben erleichtert werden, womit Zeit eingespart werden kann, der Bedienungskomfort erhöht werden kann, und Verfahrensqualität durch Reduktion von Bedienungsfehlern weiterhin erhöht werden kann.

In einem zweiten Aspekt wird die der Erfindung zugrundeliegende Aufgabe durch ein Verfahren gelöst, bei dem der Siebträger aus einer Filtrierstellung in die Siebwechselstellung bewegt wird, das Filterelement aus der Kavität entnommen und ein neues Filterelement in die Kavität eingesetzt wird und die Position des Siebträgers mittels der Steuerungseinrichtung und Antriebseinrichtung stufenweise und wiederholend oder kontinuierlich so eingestellt wird, dass die Füllaussparung zum Befüllen der Kavität in Fluidverbindung mit dem Fluideintrittskanal und/oder dem Fluidaustrittskanal gebracht wird.

Hinsichtlich der Vorzüge des zweiten Aspektes der Erfindung sei auf die bereits diskutierten Vorteile verweisen.

Das Verfahren wird dadurch weitergebildet, dass Fluid durch die Füllaussparung in die Kavität einströmt und Luft aus der mindestens eine Entlüftungsaussparung aus der Kavität ausströmt und der Fluiddruck im Fluideintrittskanal und/oder im Fluidaustrittskanal während des Füllens der Kavität innerhalb definierbarer Druckbereiche verbleibt.

Gemäß einer weiteren bevorzugten Ausführungsform umfasst das Verfahren die Schritte: Vorschub des Siebträgers in eine Startposition, Kontinuierlicher Vorschub des Siebträgers oder stufenweiser und wiederholender Vorschub des Siebträgers mit einer definierbaren Vorschubgeschwindigkeit, Verbleiben in einer definierbaren Vorschubposition, bis die Kavität vollständig gefüllt ist.

Hierbei wird vorzugsweise auf die Vorschubgeschwindigkeit des Siebträgers Einfluss genommen und diese jedenfalls so gewählt, dass sich die Kavität so langsam füllt, dass der Fluiddruck im Fluideintrittskanal und/oder im Fluidaustrittskanal geringen oder keinen Schwankungen unterworfen ist und vorzugsweise während des Füllens der Kavität innerhalb definierbarer Druckbereiche verbleibt.

Das Verfahren wird weitergebildet durch die Schritte: Vorschub des Siebträgers in eine Startposition, Druckmessung in dem Fluideintrittskanal und/oder Fluidaustrittskanal und Speichern des mindestens einen Druckwertes, Vorschub des Siebträgers um einen Taktschritt, Verbleiben in dieser Position für eine Taktpause, Messen des Fluiddrucks im Fluideintrittskanal und/oder Fluidaustrittskanal, Vergleichen des mindestens einen Messwerts mit dem mindestens einen gespeicherten Druckwert.

Die Schritte ermöglichen besonders vorteilhaft einen Vergleich eines vor dem Siebwechsel ermittelten Druckwertes mit einem Druckwert, der während des Befüllens der Kavität gemessen wird. Insbesondere aufgrund der Viskosität des Fluids verbleibt der Siebträger vor der Druckmessung für einen definierten Zeitabschnitt in seiner Position, um eine Normalisierung der Druckverhältnisse zu erzielen und verlässliche Messwerte zu generieren.

Ferner weist das Verfahren bevorzugt die weiteren Schritte auf: Bei Ausbleiben einer Druckreduzierung gegenüber dem gespeicherten Druckwert: weiterer Vorschub des Siebträgers um eine Taktstrecke und Verbleiben in dieser Position für eine Taktpause, in diesem Fall: Wiederholung des Schrittes, bei Druckreduzierung nach einer Taktpause gegenüber dem gespeicherten Wert um mehr als einen Grenzwert: in diesem Fall Rückverfahren des Siebträgers um eine erste Rückschubstrecke, Wiederholung des Schrittes, bei Druckreduzierung nach einer Taktpause gegenüber dem gespeicherten Druckwert innerhalb des Grenzwertes: in diesem Fall Ausführung eines weiteren Schrittes, Verbleiben in der betreffenden Vorschubposition bis die Kavität vollständig gefüllt ist.

Die beschriebenen - iterativen - Verfahrensschritte ermöglichen eine hochpräzise Anpassung der Vorschubposition des Siebträgers und eine Optimierung derselben im Hinblick auf den Gesamtsystemdruck.

Verändert sich der Systemdruck in einer ersten Vorschubposition des Siebträgers nicht, so wird dieser weiter vorgeschoben, sodass sich der Querschnitt zwischen Fluideingang und Vorflutöffnung erhöht, wobei mehr Fluid in die Kavität vordringen kann. Reduziert sich der Gesamtsystemdruck an einer bestimmten Vorschubposition des Siebträgers indes soweit, dass der Druckabfall einen vorab definierten Grenzwert unterschreitet, so findet ein Rückverfahren des Siebträgers um eine erste Rückschubstrecke statt.

Hierdurch findet eine Stabilisierung des Systemdruckes statt. Ist schließlich eine Befüllposition gefunden, bei der der Druck innerhalb der vorgegebenen Grenzwerte verbleibt, und gleichzeitig eine ausreichende Füllung der Kavität erfolgt, so verbleibt der Siebträger in dieser Position, bis die Kavität des Siebträgers vollständig gefüllt ist.

Gemäß einer alternativen Ausführungsform weist das Verfahren die Schritte auf: Vorschub des Siebträgers in eine Startposition, Druckmessung in dem Fluideintrittskanal und/oder Fluidaustrittskanal und Speichern des mindestens einen Druckwertes, Kontinuierlicher Vorschub des Siebträgers mit einer definierbaren Vorschubgeschwindigkeit, kontinuierliches Messen des Fluiddrucks in dem Fluideintrittskanal und/oder Fluidaustrittskanal, Vergleichen des mindestens einen Messwerts mit dem mindestens einen gespeicherten Druckwert.

Die beschriebenen Schritte ermöglichen eine hochpräzise Anpassung der Vorschubposition des Siebträgers und eine Optimierung derselben im Hinblick auf den Gesamtsystemdruck.

Verändert sich der Systemdruck in einer ersten Vorschubposition des Siebträgers nicht oder nur geringfügig, so wird dieser kontinuierlich weiter vorgeschoben, sodass der freie Strömungsquerschnitt zwischen Fluideintrittskanal und Vorflutöffnung größer wird, wobei mehr Fluid in die Kavität vordringen kann. Reduziert sich der Gesamtsystemdruck an einer bestimmten Vorschubposition des Siebträgers indes soweit, dass der Druckabfall einen vorab definierten Grenzwert unterschreitet, so findet ein Rückverfahren des Siebträgers um eine erste Rückschubstrecke statt.

Hierdurch findet eine Stabilisierung des Systemdruckes statt. Ist schließlich eine Befüllposition gefunden, bei der der Druck innerhalb der vorgegebenen Grenzwerte verbleibt, und gleichzeitig eine ausreichende Füllrate der Kavität sichergestellt ist, so verbleibt der Siebträger in dieser Position, bis die Kavität vollständig gefüllt ist.

Gemäß einer bevorzugten Weiterbildung weist das Verfahren darüber hinaus den Schritt auf: Speichern der Vorschubposition und Verwendung derselben für folgende Verfahrensdurchläufe.

Hierdurch wird die Selbstlernfunktionalität des Verfahrens begründet. Ein Speichern von Parametern aus vergangenen Durchläufen, die sich beispielsweise als optimale Positionen des Siebträgers zur Befüllung mit einem bestimmtes Fluid herausgestellt haben, ermöglicht es für zukünftige Durchgänge, diese Position schnell anzusteuern und insoweit eine Verfahrensbeschleunigung bei einer Erhöhung der Verfahrensdurchführungsqualität zu erzielen.

Das Verfahren wird dadurch weitergebildet, dass im Falle der Druckreduzierung nach einer Taktpause gegenüber dem gespeicherten Druckwert um mehr als einen Grenzwert das Verfahren weiterhin aufweist:
Messen des Fluiddrucks im Fluideintrittskanal und/oder Fluidaustrittskanal und Vergleich mit dem mindestens einen gespeicherten Druckwert, bei Druckreduzierung nach einer Taktpause gegenüber dem gespeicherten Druckwert um mehr als einen Grenzwert: Weiteres Rückverfahren des Siebträgers um eine zweite Rückschubstrecke, Verfahren in die Entlüftungsposition und erneuter Verfahrensdurchlauf mit reduziertem Taktschritt.

Insbesondere eine Reduzierung des Taktschritts, wie sie in diesen Verfahrensschritten vorgesehen ist, bringt den Vorteil mit sich, dass das Auffinden einer geeigneten Befüllposition sichergestellt wird. Das Verfahren wird im Hinblick auf den Taktschritt somit im Laufe der Zeit engmaschiger, wenn mit den initial vorgegebenen, größeren Taktschritten keine geeigneten Befüllposition aufgefunden werden kann.

Insgesamt wird damit eine ökonomische Herangehensweise zum Auffinden der Befüllposition vorgeschlagen.

Weitere Merkmale und Vorteile der Erfindung ergeben sich aus den beigefügten Ansprüchen und der nachfolgenden Beschreibung, in der Ausführungsbeispiele anhand schematischer Zeichnungen im Einzelnen erläutert werden.

Im Einzelnen zeigen:
- Fig. 1: ein erstes Ausführungsbeispiel einer erfindungsgemäßen Filtriervorrichtung in einer Schnittansicht;
- Fig. 2: das Ausführungsbeispiel der erfindungsgemäßen Filtriervorrichtung in einer weiteren Schnittansicht;
- Fig. 3a-d: das Ausführungsbeispiel der erfindungsgemäßen Filtriervorrichtung in Schnittansichten relativ zur Längsachse des Siebträgers, wobei unterschiedliche Prozessschritte im Hinblick auf die Befüllung des Siebbolzens gezeigt sind;
- Fig. 4a-c: das Ausführungsbeispiel der erfindungsgemäßen Filtriervorrichtung in Ausschnitten, wobei unterschiedliche Prozessschritte im Hinblick auf den Vorschub des Siebbolzens gezeigt sind;
- Fig. 5: das Ausführungsbeispiel der erfindungsgemäßen Filtriervorrichtung in einem Heißschmelzklebstoffapplikationssystem;
- Fig. 6: das Ausführungsbeispiel der erfindungsgemäßen Filtriervorrichtung in einem Heißschmelzklebstoffapplikationssystem, wobei einer der Siebträger aus der Anordnung entfernt ist;
- Fig. 7: ein Ablaufdiagramm eines erfindungsgemäßen Verfahrens zum Betreiben einer Filtriervorrichtung;
- Fig. 8: ein Blockschaltbild einer erfindungsgemäßen Steuerungseinrichtung; und
- Fig. 9 und 10: Blockschaltbilder alternativer Ausführungsformen erfindungsgemäßer Steuerungseinrichtungen für ein alternatives Ausführungsbeispiel einer erfindungsgemäßen Filtriervorrichtung.

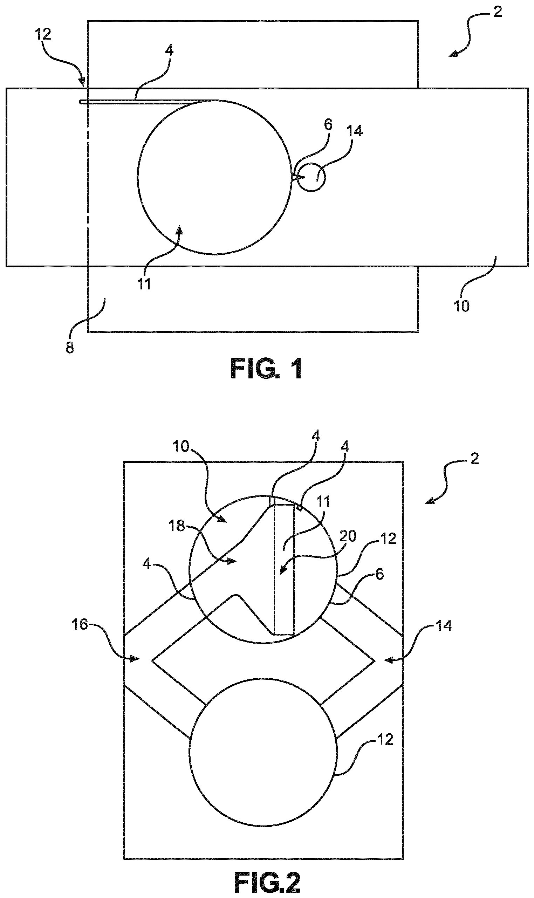

Fig. 1 zeigt eine Filtriervorrichtung 2, die über ein Gehäuse 8 verfügt. Das Gehäuse 8 weist eine Aufnahme 12 zur Aufnahme eines Siebträgers 10 auf, der in den nachfolgenden Figuren als Siebbolzen 10 ausgebildet ist.

Es sei angemerkt, dass hiermit explizit auch alternative Ausgestaltungen eines Siebträgers, wie beispielsweise ein plattenförmiger Siebträger und dergleichen, in den Schutzbereich einbezogen werden.

In dem Siebbolzen 10 ist ein Filterelement 11 angeordnet. Ferner weist der Siebbolzen 10 Entlüftungsaussparungen 4 auf. Darüber hinaus weist der Siebbolzen 10 eine Füllaussparung 6 auf. Mittels der Füllaussparung 6 ist es möglich, den Siebbolzen 10, bzw. dessen im Inneren angeordneten Hohlraum (Kavität 18, siehe Fig. 2) durch selektive Verbindung mit dem Fluideintrittskanal 14 zu füllen. Während des Befüllvorgangs dient die Entlüftungsaussparung 4 der Abgabe von Luft an die Umgebung. Das zum Befüllen erforderliche Fluid wird dem Fluideintrittskanal 14 entnommen. In den Figuren sind sowohl der Fluideintrittskanal 14, als auch der Fluidaustrittskanal 16 so ausgestaltet, dass diese mit der oberen Aufnahme 12 und der unteren Aufnahme 12 fluidleitend verbunden sind, wenn sich in der jeweiligen Aufnahme 12 ein Siebbolzen 10 befindet. In Fig. 2 ist die Filtriervorrichtung 2 in einer Schnittdarstellung senkrecht zur Längsachse der Siebbolzen 10 dargestellt. Das Gehäuse 8 weist insgesamt zwei Aufnahmen 12 zur Aufnahme von Siebbolzen 10 auf. Allerdings ist in dem gezeigten Beispiel nur in der oberen Aufnahme 12 ein Siebbolzen 10 eingesetzt.

Der obere Siebbolzen 10 weist eine Siebplatte 20 mit Filterelement 11 auf. Darüber hinaus sind die Entlüftungsaussparungen 4 ebenso sichtbar, wie die Füllaussparung 6, die fluidleitend mit dem Fluideintrittskanal 14, in Abhängigkeit von der Axialposition des Siebbolzens 10, verbindbar ist.

Ferner ist in Fig. 2 die sich in dem Siebbolzen 10 befindliche Kavität 18 zu erkennen. Insbesondere wird diese Kavität 18 beim Befüllvorgang über die Füllaussparung 6 mit Fluid gefüllt, wobei die sich anfangs in der Kavität 18 befindliche Luft über die Entlüftungsaussparungen 4 an die Umgebung abgegeben wird.

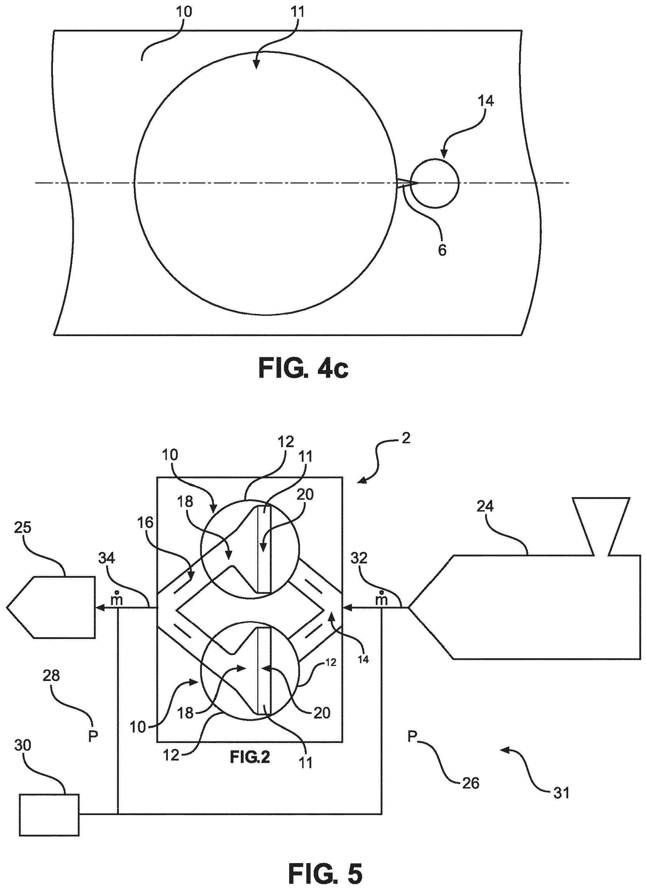

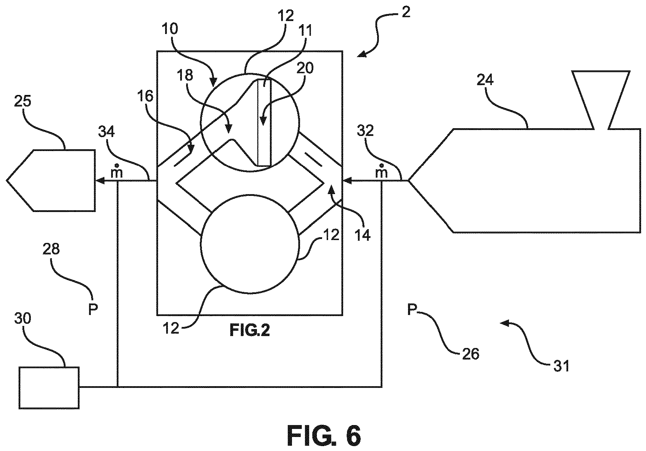

Befindet sich der Siebbolzen 10 in einer Filtrierstellung, gelangt das Fluid vom Fluideintrittskanal 14 in den Siebbolzen 10, wird von dem Filterelement 11 gefiltert und tritt anschließend über den Fluidaustrittskanal 16 aus der Filtriervorrichtung 2 aus, beispielsweise in Richtung eines Applikators (nicht dargestellt, siehe Fig. 5 und 6).

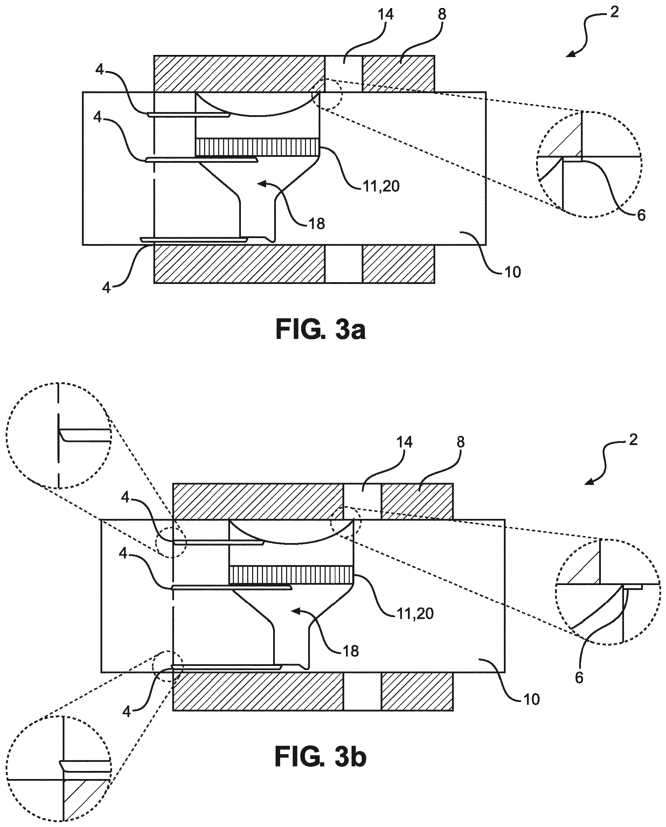

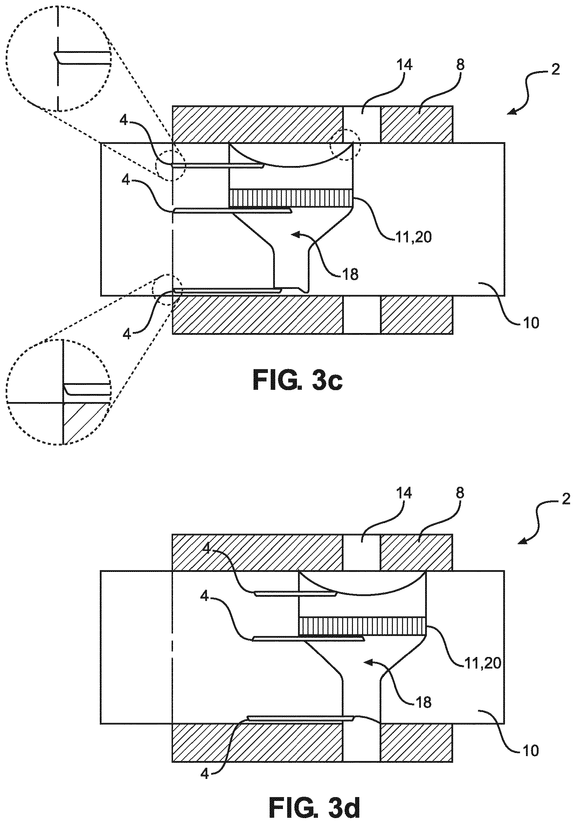

Der Befüllvorgang und die dazu notwendigen Schritte sind in den Figuren 3a bis 3d detailliert. Der Siebbolzen 10 befindet sich in Fig. 3a zunächst in einer Ausgangsstellung in dem Gehäuse 8. Wie Fig. 3a zu entnehmen ist, ist die Füllaussparung 6 bereits geringfügig mit dem Fluideintrittskanal 14 fluidleitend verbunden. Dies hat zur Folge, dass geringe Mengen Fluid in die Kavität 18 des Siebbolzens 10 einströmen. Über die Entlüftungsaussparungen 4 kann die in der Kavität 18 enthaltene Luft an die Umgebung abgegeben werden.

In Fig. 3b ist der Siebbolzen 10 so weiter nach rechts vorgeschoben, dass eine größere Öffnung zwischen Fluideintrittskanal 14 und Kavität 18 freigegeben wird. In der Folge erhöht sich der Massenstrom des Fluides in Richtung der Kavität, wodurch diese rascher gefüllt wird. Über den Zwischenschritt 3c wird der Siebbolzen 10 schließlich nach vollständiger Füllung der Kavität 18 weiter nach rechts vorgeschoben und in seine Filtrierstellung gebracht.

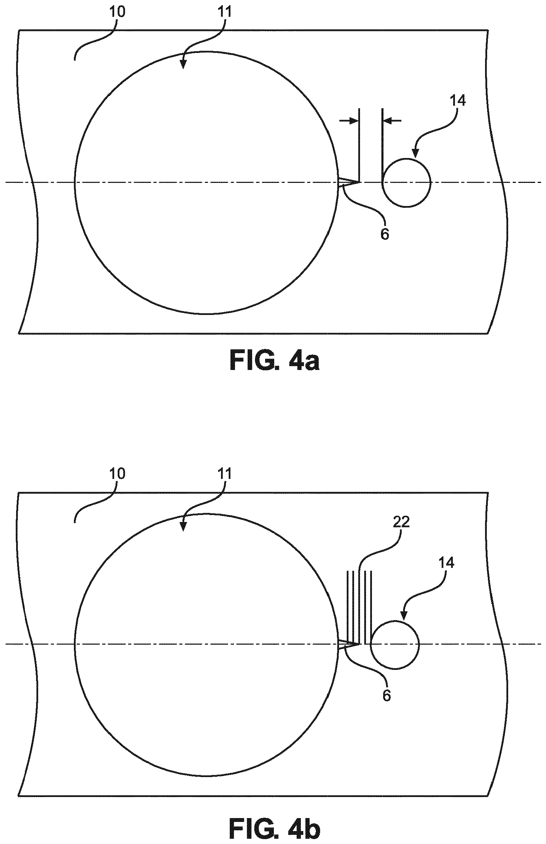

In Fig. 4a ist in bekannter Weise der Siebbolzen 10 mit dem Filterelement 11 dargestellt. Außerdem ist die Füllaussparung 6 erkennbar sowie der Fluideintrittskanal 14.

Wie aus Fig. 4b ersichtlich, wird nun im Rahmen des Steuerungsverfahrens der Siebbolzen 10 mit diskreten Taktschritten 22 in Richtung des Fluideintrittskanals 14 - bezogen auf die vorliegende Abbildung nach rechts - verschoben. Hierbei übernimmt die Steuerungseinrichtung 30 die Aufgabe, den Vorschub des Siebbolzens 10 dergestalt zu regeln, dass die Kavität durch Verbindung der Füllaussparung 6 mit dem Fluideintrittskanal 14 adäquat gefüllt wird, jedoch insgesamt der Systemdruck innerhalb vordefinierter Grenzen verbleibt.

In Fig. 4c ist beispielhaft ein Entlüftungsstopp dargestellt. Hierbei handelt es sich um die Position des Siebbolzens 10 relativ zum umgebenden Gehäuse 8, bei der die Füllaussparung 6 so mit dem Fluideintrittskanal 14 fluidleitend verbunden ist, dass die Kavität 18 gefüllt wird und der Systemdruck innerhalb vordefinierter Grenzwerte verbleibt. Diese Position ist insbesondere Fluidabhängig und ist für jeden Verfahrensdurchlauf erneut zu ermitteln.

Fig. 5 zeigt die Filtriervorrichtung 2 eingebettet in ein Heißschmelzklebstoffapplikationssystem 31. Das Heißschmelzklebstoffapplikationssystem 31 weist eine Verflüssigungs- und Fördereinrichtung 24 auf. In dieser wird fester Kunststoff, der sich zumeist in Granulatform befindet, durch Erwärmen verflüssigt und sodann mittels einer in die Verflüssigungs- und Fördereinrichtung 24 integrierten Pumpe in Richtung eines Applikators 25 befördert. Zwischen der Verflüssigungs- und Fördereinrichtung 24 und dem Fluideintrittskanal 14 ist eine Leitung 32 angeordnet.

Um sicherzustellen, dass das Fluid den Applikator 25 mit hoher Qualität und ohne Festkörpereinschlüsse erreicht, durchläuft das Fluid die Filtriereinrichtung 2. Die Filtriereinrichtung 2 weist in bekannter Weise ein Gehäuse 8 auf, welches über zwei Siebbolzen-Aufnahmen 12 verfügt. Wie in Fig. 5 gezeigt, befinden sich beide Siebbolzen 10 in einer Filtrierposition und filtern das Fluid. Das gefilterte Fluid gelangt nun über eine Leitung 34 zum Applikator 25.

In den Leitungen 32 und 34 sind darüber hinaus Drucksensoren 26, 28 angeordnet: der Eingangsdrucksensor 26 in der Leitung 32 und der Ausgangsdrucksensor 28 in der Leitung 34. Mittels der Drucksensoren 26 und 28 erfolgt eine Kontrolle des Systemdruckes.

In Fig. 6 ist schließlich noch desselben Heißschmelzklebstoffapplikationssystems 31 gezeigt, wobei der untere Siebbolzen 10 in der betreffenden Figur nicht dargestellt ist.

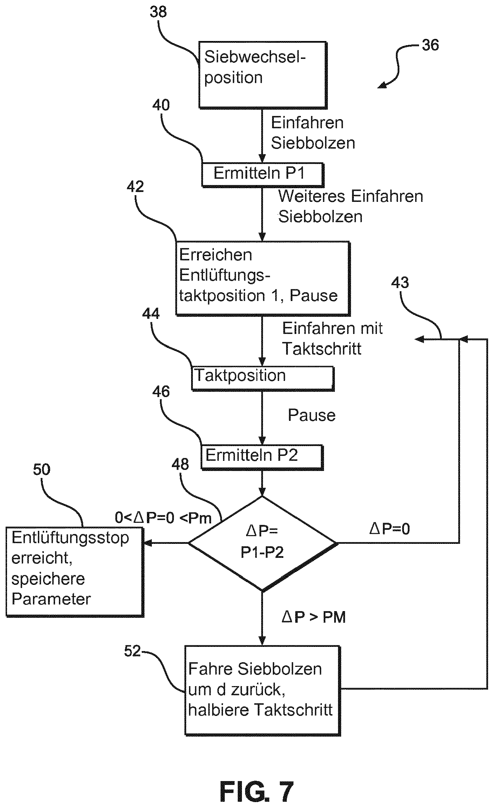

Fig. 7 zeigt ein Ablaufdiagramm 36 zum Betrieben einer Filtriervorrichtung 2. Ausgangspunkt bildet die Siebwechselposition 38. Hierbei befindet sich der Siebbolzen 10 in einer solchen Stellung, die einen Wechsel des Filterelements 11 erlaubt. Der Siebbolzen 10 wird in dieser Position nicht zum Filtrieren des Fluids verwendet.

Nach dem Wechseln des Filterelements 11 wird nun der Siebbolzen 10 in die entsprechende Siebbolzenaufnahme 12 teilweise eingefahren. Vor Erreichen einer ersten Entlüftungstaktposition findet eine Messung des Drucks P1 statt (Schritt 40). Dieser Druck P1 kann prinzipiell sowohl eine Messung des Eingangsdruckes der Filtriervorrichtung mittels des Eingangsdrucksensors 26, als auch eine Messung des Ausgangsdruckes der Filtriervorrichtung mittels des Ausgangsdrucksensors 28 oder eine Kombination derselben beinhalten.

Nach Erreichen der Entlüftungstaktposition (Schritt 42) wird zunächst eine Verfahrenspause eingehalten. Anschließend erfolgt ein weiteres inkrementales Einfahren des Siebbolzens 10 mit einem Taktschritt 22, der einer vordefinierten Einschubstrecke entspricht. Nach Erreichen dieser Taktposition 44 und Verstreichen einer Pause findet anschließend eine erneute Ermittlung des Druckes P2 statt (Schritt 46). Dieser Druck kann sich auf den Eingangsdruck der Filtriervorrichtung (Eingangsdrucksensor 26) und/oder den Ausgangsdruck der Filtriervorrichtung (Ausgangsdrucksensor 28) beziehen. Dieser nun ermittelte Druck P2 wird nun im Schritt 48 subtrahiert von dem im Schritt 40 ermittelten Druck P1.

Je nach Ergebnis der Subtraktion sind drei Fälle zu unterscheiden:
In einem ersten Fall ist es nach dem Durchführen des Taktschrittes 22 nicht zu einem Druckabfall gekommen, das heißt P1 entspricht P2 oder die ermittelte Druckdifferenz ist kleiner als ein zu definierender Grenzwert. In diesem Fall ist ein weiteres Einschieben des Siebbolzens 10 erforderlich und das Verfahren startet erneut mit Schritt 43. Bezogen auf den Siebbolzen 10 war der Vorschub des Siebbolzens 10 an dieser Stelle noch nicht ausreichend, um die Füllaussparung 6 mit dem Fluideintrittskanal 14 so zu verbinden, dass Fluid in ausreichender Menge in die Kavität 18 einströmt.

In einem zweiten Fall ist der im Schritt 48 ermittelte Druckunterschied größer ist als ein insgesamt zulässiger Druckabfall Pm in dem System. In diesem Fall wurde der Siebbolzen 10 soweit vorgeschoben, dass die Kavität derart schnell befüllt wird, dass der Druckabfall größer ist als der Grenzwert Pm. Infolgedessen wird im Schritt 52 der Siebbolzen 10 um eine Strecke d zurückverfahren und anschließend im Schritt 43 erneut eingefahren, allerdings mit halbiertem Taktschritt 22. Insofern findet durch die Halbierung des Taktschrittes 22 ein engmaschigeres Herantasten an eine Entlüftungsstopp-Position statt.

Ein dritter Fall ist dann gegeben, wenn die Differenz zwischen den Drücken P1 und P2 zwar größer als null (oder größer als eine Mindestdruckdifferenz) ist, jedoch kleiner als Pm. In diesem Fall ist der Entlüftungsstopp 50 erreicht. Der Siebbolzen 10 verbleibt nun in dieser Position, bis dieser vollständig gefüllt ist. Anschließend werden in Schritt 50 Betriebsparameter, wie die momentane Position des Siebbolzens 10 in der Entlüftungsstopp-Position, der Fluidtyp und der Systembetriebsdruck, gespeichert.

Für folgende Befüllvorgänge ist es nun möglich, in Abhängigkeit von dem verwendeten Fluid, die als optimal ermittelte Entlüftungsstopp-Position entweder direkt anzufahren, oder sich dieser gezielter zu nähern, um das Verfahren mittels dieser Selbstlernfunktionalität zu beschleunigen und zu optimieren.

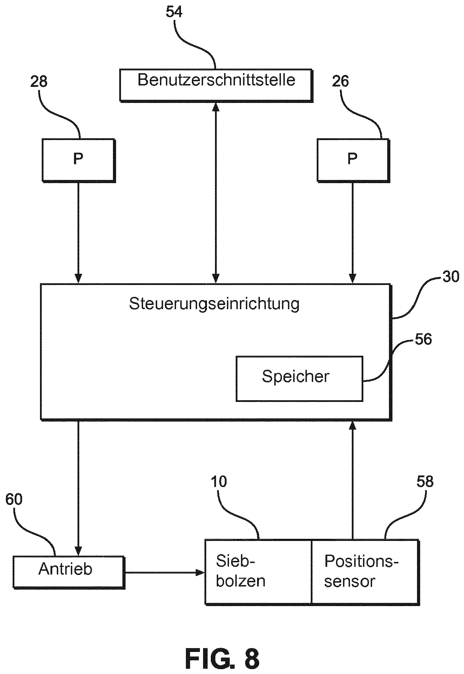

Fig. 8 detailliert den Aufbau der Steuerungseinrichtung 30 und deren Schnittstellen. Wie bereits in den Figuren 5 und 6 gezeigt, empfängt die Steuerungseinrichtung 30 Druckmesswerte von dem Eingangsdrucksensor 26 und/oder dem Ausgangsdrucksensor 28. Darüber hinaus ist eine Benutzerschnittstelle 54 mit der Steuerungseinrichtung 30 gekoppelt. Die Benutzerschnittstelle 54 ist bidirektional an die Steuerungseinrichtung 30 angebunden, und ist somit dazu eingerichtet, sowohl von der Benutzerschnittstelle 54 Daten zu empfangen, als auch Daten an diese zu übertragen.

Unter Berücksichtigung der Druckmesswerte 26, 28 und der Benutzereingaben über die Benutzerschnittstelle 54 steuert die Steuerungseinrichtung 30 den Antrieb 60. Dieser Antrieb 60 ist mit dem Siebbolzen 10 gekoppelt und dazu eingerichtet, die Position des Siebbolzens 10 relativ zum umgebenden Gehäuse 8 selektiv zu beeinflussen. So kann der Siebbolzen 10 mithilfe des Antriebs 60 in die Siebwechselposition, die Filtrierposition und beliebige Taktpositionen, beispielsweise zum Füllen der Kavität 18 nach einem Siebwechsel, verfahren werden.

Die Position des Siebbolzens 10 wird mit dem Positionssensor 58 überwacht. Die Position des Siebbolzens 10 wird mithilfe des Positionssensors 58 an die Steuerungseinrichtung 30 übertragen.

Die Steuerungseinrichtung 30 ist insbesondere dazu eingerichtet, das Verfahren 36 auszuführen. Darüber hinaus verfügt die Steuerungseinrichtung 30 über einen Speicher, um insbesondere Parameter aus dem Verfahren 36 zu speichern und für spätere Verfahrensdurchläufe nutzbar zu machen.

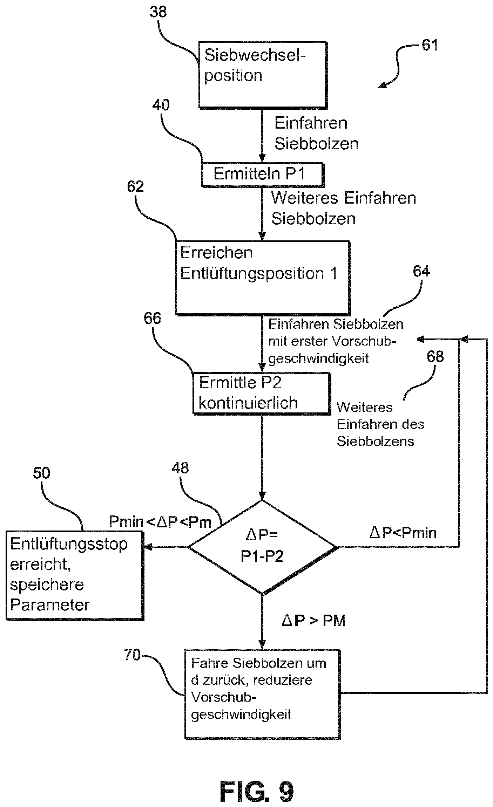

Fig. 9 zeigt ein alternatives Ausführungsbeispiel eines Ablaufdiagramms 61 zum Betreiben einer Filtriervorrichtung 2. Erneut bildet einen Ausgangspunkt des Verfahrens die Siebwechselposition 38. Hierbei befindet sich der Siebbolzen 10 in einer solchen Stellung, die einen Wechsel des Filterelements 11 erlaubt. Der Siebbolzen 10 wird in dieser Position nicht zum Filtrieren des Fluids verwendet.

Nach einem Wechsel des Filterelements 11 wird der Siebbolzen 10 in die entsprechende Siebbolzenaufnahme 12 teilweise eingefahren. Vor Erreichen einer ersten Entlüftungsposition 62 findet eine Ermittlung des Druckes P1 gemäß Schritt 40 statt. Wie bereits ausgeführt, kann dieser Druck P1 prinzipiell sowohl eine Messung des Eingangsdruckes der Filtriervorrichtung mittels des Eingangsdrucksensors 26, als auch eine Messung des Ausgangsdruckes der Filtriervorrichtung mittels des Ausgangsdrucksensors 28 oder eine Kombination derselben beinhalten.

Nach dem Erreichen der Entlüftungsposition 1 (Schritt 62) wird der Siebbolzen mit einer ersten Vorschubgeschwindigkeit gemäß Schritt 64 kontinuierlich eingefahren. Während des Einfahrens wird der Druck P2 im Schritt 66 kontinuierlich ermittelt. Der Druck P2 kann sich auf den Eingangsdruck der Filtriervorrichtung (Eingangsdrucksensor 26) und/oder den Ausgangsdruck der Filtriervorrichtung (Ausgangsdrucksensor 28) beziehen. Dieser ermittelte Druck P2 wird im Schritt 48 subtrahiert von dem in Schrift 40 ermittelten Druck P1. Dieses geschieht im Gegensatz zu dem in der Figur 7 gezeigten Ausführungsbeispiel kontinuierlich während des Einschiebens des Siebbolzens 10.

Je nach Ergebnis der Subtraktion aus Schritt 48 sind drei Fälle zu unterscheiden.

In einem ersten Fall ist es während des kontinuierlichen Einfahrens des Siebbolzens 10 noch nicht zu einem Druckabfall beziehungsweise Mindestdruckabfall Pmin gekommen, sodass der Siebbolzen 10 im Schritt 68 weiter eingefahren wird. Übersteigt der Druckabfall hingegen einen Maximalwert Pm so wird der Siebbolzen ausweislich des Schrittes 70 um eine bestimmte Strecke d zurückgefahren und anschließend mit reduzierter Vorschubgeschwindigkeit erneut eingefahren. Das Verfahren läuft in diesem Fall vom Schritt 66 ausgehend erneut ab. Liegt der in Schritt 48 ermittelte Druckabfall in einem Bereich, der größer ist als der Mindestdruckabfall Pmin und kleiner ist als der Maximaldruckabfall Pm, so ist ausweislich des Schrittes 50 der Entlüftungsstopp erreicht und der Siebbolzen 10 verbleibt in der betreffenden Position; die Kavität 18 wird geflutet.

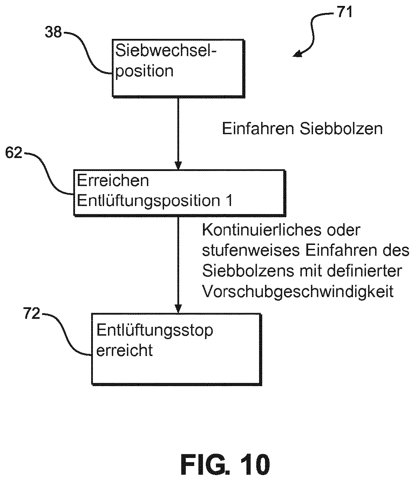

Ein weiteres alternatives Ausführungsbeispiel eines Ablaufdiagramms 71 zum Betreiben einer alternativen Filtriervorrichtung 2 ist in Figur 10 gezeigt. Ein Drucksensor ist gemäß diesem alternativen Ausführungsbeispiel nicht notwendig für die Durchführung des Verfahrens bzw. für die alternative erfindungsgemäße Filtriervorrichtung 2 gemäß dieses Ausführungsbeispiels.

Ausgehend von der Siebwechselposition 38 wird der Siebbolzen 10 in die entsprechende Siebbolzenaufnahme 12 teilweise einfahren und erreicht eine Entlüftungsposition 1 (Schritt 62). Ausgehend von dieser Entlüftungsposition 1 wird der Siebbolzen 10 nun kontinuierlich oder stufenweise mit einer definierten, vorzugsweise langsamen Vorschubgeschwindigkeit weiter eingefahren. Dieses wird solange durchgeführt, bis ausweislich des Schrittes 72 ein Entlüftungsstopp erreicht ist. Bei diesem Verfahren erfolgt das Einfahren des Siebbolzens 10 so langsam, dass bereits mittels einer geeigneten Definition der Einfahrgeschwindigkeit sichergestellt ist, dass der betreffende Druckabfall in dem System einen definierten maximalen Druckabfall nicht überschreitet. Eine Drucküberwachung findet bei diesem alternativ bevorzugten Verfahren nicht statt.

### Liste der verwendeten Bezugszeichen

- 2: Filtriervorrichtung
- 4: Entlüftungsaussparung
- 6: Füllaussparung
- 8: Gehäuse
- 10: Siebbolzen (Siebträger)
- 11: Filterelement
- 12: Aufnahme
- 14: Fluideintrittskanal
- 16: Fluidaustrittskanal
- 18: Kavität
- 20: Siebplatte
- 22: Taktschritt
- 24: Verflüssigungs- und Fördervorrichtung
- 25: Applikator
- 26: Eingangsdrucksensor
- 28: Ausgangsdrucksensor
- 30: Steuerungseinrichtung
- 31: Heißschmelzklebstoffapplikationssystem
- 32: Eingangsleitung
- 34: Ausgangsleitung
- 36: Ablaufdiagramm des Verfahrens
- 38: Siebwechselposition
- 40: Druckermittlung P1
- 42: Erreichen Entlüftungstaktposition 1, Pause
- 44: Taktposition
- 46: Druckermittlung P2
- 48: Druckvergleich
- 50: Entlüftungsstop erreicht, Speichern der Parameter für Folgevorgänge
- 52: Rückfahren des Siebbolzens, Taktschritthalbierung
- 54: Benutzerschnittstelle
- 56: Speicher
- 58: Positionssensor
- 60: Antriebseinrichtung
- 61: Zweites Ablaufdiagramm
- 62: Erreichen Entlüftungsposition 1
- 64: Einfahren des Siebbolzens mit erster Vorschubgeschwindigkeit
- 66: Ermittle P2 kontinuierlich
- 68: Weiteres Einfahren des Siebbolzens
- 70: Fahre Siebbolzen um d zurück, reduziere Vorschubgeschwindigkeit
- 71: Drittes Ablaufdiagramm
- 72: Entlüftungsstop erreicht

## Patentansprüche

1. Filtriervorrichtung (2) zum Filtrieren eines Fluids, insbesondere eines verflüssigten Kunststoffes, umfassend:
- ein Gehäuse (8) mit einer Aufnahme (12) zur Aufnahme eines Siebträgers (10), einem Fluideintrittskanal (14) und einem Fluidaustrittskanal (16);
- einen innerhalb der Aufnahme (12) bewegbaren Siebträger (10) mit mindestens einer Kavität (18) zur Aufnahme einer Siebstützplatte mit Filterelement (11),
wobei der Siebträger (10) aus einer Filtrierstellung in eine Siebwechselstellung bewegbar ist,
wobei der Siebträger (10) und/oder die Aufnahme (12) mindestens eine Füllaussparung (6) zum Befüllen der Kavität (18) mit Fluid aufweist, die in Abhängigkeit von der Position des Siebträgers (10) in der Aufnahme (12) einen unterschiedlich großen Strömungsquerschnitt zum Einleiten von Fluid aus dem Fluideintrittskanal (14) und/oder dem Fluidaustrittskanal (16) in der Kavität freigibt,
wobei der Siebträger (10) mindestens eine Entlüftungsaussparung (4) zur Abgabe der sich in der Kavität (18) befindlichen Luft während des Füllens aufweist, und
eine Steuerungseinrichtung (30), die derart eingerichtet und ausgebildet ist, dass diese die Position des Siebträgers (10) mittels Steuerungssignalen stufenweise und wiederholend oder kontinuierlich verändert,
**dadurch gekennzeichnet, dass** die Steuerungseinrichtung weiterhin derart eingerichtet und ausgebildet ist, dass diese die Vorschubgeschwindigkeit des Siebträgers (10) mittels Steuerungssignalen so stufenweise und wiederholend verändert oder kontinuierlich verändert, dass der Fluiddruck im Fluideintrittskanal (14) und/oder im Fluidaustrittskanal (16) während des Füllens der Kavität (18) innerhalb definierbarer Druckbereiche verbleibt.

2. Filtriervorrichtung nach Anspruch 1,
**dadurch gekennzeichnet, dass** mindestens ein Drucksensor (26, 28) zur Messung des Fluiddrucks im Fluideintrittskanal (14) und/oder im Fluidaustrittskanal (16) vorgesehen ist.

3. Filtriervorrichtung (2) nach Anspruch 1 oder 2,
**dadurch gekennzeichnet, dass** der Siebträger (10) als Siebbolzen (10) ausgebildet und axial innerhalb der Aufnahme (12) bewegbar ist und die Füllaussparung (6) im Wesentlichen parallel zur Längsachse des Siebbolzens (10) verläuft.

4. Filtriervorrichtung (2) nach einem der vorhergehenden Ansprüche,
**dadurch gekennzeichnet, dass** die Füllaussparung (6) als eine Nut ausgebildet ist, die in Richtung der Längsachse des Siebbolzens (10) eine Querschnittsveränderung aufweist und/oder einen im Wesentlichen dreieckigen Querschnitt.

5. Filtriervorrichtung (2) nach einem der vorhergehenden Ansprüche,
**dadurch gekennzeichnet, dass** der Siebträger (10) von einer Antriebseinrichtung (60) angetrieben wird, die als elektrischer Antrieb, insbesondere Linearmotor oder Schrittmotor ausgebildet ist.

6. Filtriervorrichtung (2) nach einem der vorhergehenden Ansprüche,
**dadurch gekennzeichnet, dass** der Siebträger (10) einen Positionssensor (58) zur Bestimmung der Position des Siebträgers (10) aufweist, der vorzugsweise als Transsonar-Wegaufnehmer ausgebildet ist.

7. Filtriervorrichtung (2) nach einem der vorhergehenden Ansprüche,
**dadurch gekennzeichnet, dass** die Steuerungseinrichtung (30) einen Speicher (56) aufweist und aus gespeicherten Sensordaten vergangener Füllvorgänge Regelungsparameter anpasst, insbesondere bezüglich Befüllungspositionen und Vorschubgeschwindigkeiten des Siebträger (10) und/oder Füllzeiten der Kavität (18).

8. Filtriervorrichtung (2) nach einem der vorhergehenden Ansprüche,
**dadurch gekennzeichnet, dass** die Steuerungseinrichtung (30) eine Benutzerschnittstelle (54) aufweist, die als Steuerungspult und/oder als berührungsempfindliches Display ausgebildet ist.

9. Verfahren (36) zum Betreiben einer Filtriervorrichtung (2) nach einem der Ansprüche 1-8 zum Filtrieren eines Fluides, bei dem
- der Siebträger (10) aus einer Filtrierstellung in die Siebwechselstellung bewegt wird,
- das Filterelement (11) aus der Kavität (18) entnommen und ein neues Filterelement (11) in die Kavität (18) eingesetzt wird,
- die Position und die Vorschubgeschwindigkeit des Siebträgers (10) mittels der Steuerungseinrichtung (30) und Antriebseinrichtung stufenweise und wiederholend oder kontinuierlich so eingestellt wird, dass die Füllaussparung (6) zum Befüllen der Kavität (18) in Fluidverbindung mit dem Fluideintrittskanal (14) und/oder dem Fluidaustrittskanal (16) gebracht wird und der Fluiddruck im Fluideintrittskanal (14) und/oder im Fluidaustrittskanal während des Füllens der Kavität (18) innerhalb definierbarer Druckbereiche verbleibt.

10. Verfahren nach Anspruch 9, umfassend die Schritte:
- Vorschub des Siebträgers (10) in eine Startposition;
- Kontinuierlicher Vorschub des Siebträgers (10) oder stufenweiser und wiederholender Vorschub des Siebträgers (10) mit einer definierbaren Vorschubgeschwindigkeit.
- Verbleiben des Siebträgers (10) in einer definierbaren Vorschubposition, bis die Kavität (18) vollständig gefüllt ist.

11. Verfahren (36) nach Anspruch 9, umfassend die Schritte:
- Vorschub des Siebträgers (10) in eine Startposition;
- Druckmessung in dem Fluideintrittskanal (14) und/oder Fluidaustrittskanal (16) und Speichern des mindestens einen Druckwertes;
- Vorschub des Siebträgers (10) um einen Taktschritt (22);
- Verbleiben in dieser Position für eine Taktpause;
- Messen des Fluiddrucks im Fluideintrittskanal (14) und/oder Fluidaustrittskanal (16)
- Vergleichen des mindestens einen Messwerts mit dem mindestens einen gespeicherten Druckwert.

12. Verfahren (36) nach Anspruch 9, mit den weiteren Schritten:
- Bei Ausbleiben einer Druckreduzierung gegenüber dem gespeicherten Druckwert:
- Weiterer Vorschub des Siebträgers (10) um eine Taktschritt (22) und Verbleiben in dieser Position für eine Taktpause;
- Wiederholung des Schrittes;
- Bei Druckreduzierung nach einer Taktpause gegenüber dem gespeicherten Wert um mehr als einen Grenzwert:
- Rückverfahren des Siebträgers (10) um eine erste Rückschubstrecke;
- Wiederholung des Schrittes;
- Bei Druckreduzierung nach einer Taktpause gegenüber dem gespeicherten Druckwert innerhalb des Grenzwertes, weiter mit nächstem Schritt;
- Verbleiben in der betreffenden Vorschubposition, bis die Kavität (18) vollständig gefüllt ist.

13. Verfahren (36) nach Anspruch 9, umfassend die Schritte:
- Vorschub des Siebträgers (10) in eine Startposition;
- Druckmessung in dem Fluideintrittskanal (14) und/oder Fluidaustrittskanal (16) und Speichern des mindestens einen Druckwertes;
- Kontinuierlicher Vorschub des Siebträgers (10) mit einer definierbaren Vorschubgeschwindigkeit;
- Kontinuierliches Messen des Fluiddrucks im Fluideintrittskanal (14) und/oder Fluidaustrittskanal (16)
- Vergleichen des mindestens einen Messwerts mit dem mindestens einen gespeicherten Druckwert.

14. Verfahren (36) nach einem der Ansprüche 9 bis 13, weiterhin umfassend den Schritt:
- Speichern der Vorschubposition und Verwendung derselben für folgende Verfahrensdurchläufe.

15. Verfahren (36) nach einem der Ansprüche 9 oder 10 wobei im Falle der Druckreduzierung nach einer Taktpause gegenüber dem gespeicherten Druckwert um mehr als einen Grenzwert das Verfahren weiterhin aufweist:
- Messen des Fluiddrucks im Fluideintrittskanal (14) und/oder Fluidaustrittskanal (16) und Vergleich mit dem mindestens einen gespeicherten Druckwert;
- Bei Druckreduzierung nach einer Taktpause gegenüber dem gespeicherten Druckwert um mehr als dem Grenzwert:
- Weiteres Rückverfahren des Siebträgers (10) um eine zweite Rückschubstrecke;
- Verfahren in die Entlüftungsstartposition und erneuter Verfahrensdurchlauf mit reduzierter Taktschritt (22).

## Claims

1. A filtering device (2) for filtering a fluid, in particular a liquefied plastic, comprising:
- a housing (8) having a receptacle (12) for receiving a screen carrier (10), and a fluid inlet channel (14) and a fluid outlet channel (16);
- a screen carrier (10) movable inside said receptacle (12), having at least one cavity (18) for receiving a screen support plate having a filter element (11),
wherein the screen carrier (10) is movable from a filtering position into a screen replacement position,
wherein the screen carrier (10) and/or the receptacle (12) has a filling recess (6) for filling the cavity (18) with fluid, which releases a flow cross-section whose size depends on the position of the screen carrier (10) in the receptacle (12) to feed fluid from the fluid inlet channel (14) and/or the fluid outlet channel (16) into the cavity,
wherein the screen carrier (10) has at least one ventilation recess (4) for releasing any air which is in the cavity (18) during filling, and
a control unit (30) which is configured and adapted in such a way that it changes the position of the screen carrier (10) in steps and repeatedly or continuously by means of control signals,
**characterized in that** the control unit is further configured and adapted to change the position of the screen carrier (10) in steps and repeatedly or continuously by means of control signals in such a way that the fluid pressure in the fluid inlet channel (14) and/or in the fluid outlet channel (16) remains within definable pressure ranges while the cavity (18) is being filled.

2. The filtering device (2) according to claim 1,
**characterized in that** at least one pressure sensor (26, 28) is provided for measuring the fluid pressure in the fluid inlet channel (14) and/or in the fluid outlet channel (16).

3. The filtering device (2) according to claim 1 or 2,
**characterized in that** the screen carrier (10) is designed as a screen plug (10) and is axially movable inside the receptacle (12), and the filling recess (6) extends substantially parallel to the longitudinal axis of the screen plug (10).

4. The filtering device (2) according to according to any one of the preceding claims, **characterized in that** the filling recess (6) is designed as a groove which has a change in cross-section in the direction of the longitudinal axis of the screen plug (10) and/or a substantially triangular cross-section.

5. The filtering device (2) according to any one of the preceding claims, **characterized in that** the screen carrier (10) is driven by a drive means (60) which is provided in the form of an electrical drive, in particular a linear motor or a stepper motor.

6. The filtering device (2) according to any one of the preceding claims, **characterized in that** the screen carrier (10) has a position sensor (58) for determining the position of the screen carrier (10) and which is preferably provided in the form of an ultrasonic transducer.

7. The filtering device (2) according to any one of the preceding claims, **characterized in that** the control unit (30) has a memory (56) and adjusts control parameters on the basis of stored sensor data from previous filling operations, in particular with regard to filling positions and feed speeds of the screen carrier (10) and/or filling times for the cavity (18).

8. The filtering device (2) according to any one of the preceding claims, **characterized in that** the control unit (30) has a user interface (54) which is provided in the form of a control panel and/or as a touch-sensitive display.

9. A method (36) for operating a filtering device (2) according to any one of claims 1-8 for filtering a fluid, according to which
- the screen carrier (10) is moved from a filtering position into the screen replacement position,
- the filter element (11) is removed from the cavity (18) and a new filter element (11) is inserted into the cavity (18),
- the position and the advancing speed of the screen carrier (10) are set by means of the control unit (30) and the drive means in steps and repeatedly or continuously in such a way that the filling recess (6) is brought into fluid communication with the fluid inlet channel (14) and/or the fluid outlet channel (16) in order to fill the cavity (18), and the fluid pressure in the fluid inlet channel (14) and/or in the fluid outlet channel remains within definable pressure ranges while the cavity (18) is being filled.

10. The method (36) according to claim 9, comprising the steps of:
- advancing the screen carrier (10) into a starting position;
- continuously or in steps and repeatedly advancing the screen carrier (10) with a definable advancing speed,
- keeping the screen carrier (10) in a definable advancing position until the cavity (18) is filled completely.

11. The method (36) according to claim 9, comprising the steps of:
- advancing the screen carrier (10) into a starting position;
- measuring the pressure in the fluid inlet channel (14) and/or fluid outlet channel (16) and storing the at least one pressure measurement;
- advancing the screen carrier (10) by one clock step (22);
- keeping it in that position for one clock pause;
- measuring the fluid pressure in the fluid inlet channel (14) and/or fluid outlet channel (16)
- comparing the at least one measured value with the at least one stored pressure value.

12. The method (36) according to claim 9, comprising the steps,
- if there is no reduction in pressure compared to the stored pressure value:
- advancing the screen carrier (10) further by one clock step (22) and keeping it in that position for one clock pause;
- repeating the step;
- if, after a clock pause, there is a reduction in pressure, compared to the stored value, by more than a threshold value:
- retracting the screen carrier (10) by a first retraction distance;
- repeating the step;
- if, after a clock pause, there is a reduction in pressure, compared to the stored pressure value, that is within the threshold value, continue with next step;
- keeping the screen carrier (10) in the respective feed position until the cavity (18) has been completely filled.

13. The method (36) according to claim 9, comprising the steps of:
- advancing the screen carrier (10) into a starting position;
- measuring the pressure in the fluid inlet channel (14) and/or fluid outlet channel (16) and storing the at least one pressure measurement;
- continuously or in steps and repeatedly advancing the screen carrier (10) with a definable advancing speed,
- continuously measuring the fluid pressure in the fluid inlet channel (14) and/or fluid outlet channel (16)
- comparing the at least one measured value with the at least one stored pressure value.

14. The method (36) according to any of claims 9-13, further comprising the step of:
- storing the feed position and using said position for subsequent cycles.

15. The method (36) according to claim 9 or 10, wherein in the event of a reduction in pressure, compared to the stored pressure value, by more than a threshold value, after a clock pause, the method further comprises the steps of:
- measuring the fluid pressure in the fluid inlet channel (14) and/or fluid outlet channel (16) and comparing it with the at least one stored pressure value;
- if, after a clock pause, there is a reduction in pressure, compared to the stored pressure value, by more than the threshold value:
- retracting the screen carrier (10) further by a second retraction distance;
- moving it into the ventilation starting position and performing a new cycle with a reduced clock step (22).

## Revendications

1. Dispositif de filtrage (2) pour filtrer un fluide, en particulier une matière plastique liquéfiée, comprenant :
- un boîtier (8) avec un logement (12) pour loger un support de tamis (10), un canal d'entrée de fluide (14) et un canal de sortie de fluide (16) ;
- un support de tamis (10) pouvant être déplacé à l'intérieur du logement (12), avec au moins une cavité (18) pour loger une plaque de soutien de tamis avec un élément formant filtre (11),
dans lequel le support de tamis (10) peut être déplacé depuis une position de filtrage dans une position de changement de tamis,
dans lequel le support de tamis (10) et/ou le logement (12) présentent au moins un évidement de remplissage (6) pour remplir la cavité (18) avec du fluide, qui dégage dans la cavité, en fonction de la position du support de tamis (10) dans le logement (12), une section transversale d'écoulement de taille différente pour introduire du fluide provenant du canal d'entrée de fluide (14) et/ou du canal de sortie de fluide (16),
dans lequel le support de tamis (10) présente au moins un évidement d'évacuation d'air (4) pour évacuer l'air se trouvant dans la cavité (18) pendant le remplissage, et
un système de commande (30) qui est mis au point et réalisé de telle manière que celui-ci modifie progressivement et de manière répétitive ou en continu la position du support de tamis (10) au moyen de signaux de commande,
**caractérisé en ce que** le système de commande est mis au point et réalisé par ailleurs de telle manière que celui-ci modifie progressivement et de manière répétitive ou modifie en continu la vitesse d'avancement du support de tamis (10) au moyen de signaux de commande de telle sorte que la pression de fluide dans le canal d'entrée de fluide (14) et/ou dans le canal de sortie de fluide (16) est maintenue dans des plages de pression pouvant être définies pendant le remplissage de la cavité (18) .

2. Dispositif de filtrage selon la revendication 1,
**caractérisé en ce que**
au moins un capteur de pression (26, 28) est prévu pour mesurer la pression de fluide dans le canal d'entrée de fluide (14) et/ou dans le canal de sortie de fluide (16) .

3. Dispositif de filtrage (2) selon la revendication 1 ou 2,
**caractérisé en ce que** le support de tamis (10) est réalisé en tant que piston à tamis (10) et peut être déplacé de manière axiale à l'intérieur du logement (12) et l'évidement de remplissage (6) s'étend sensiblement de manière parallèle par rapport à l'axe longitudinal du piston à tamis (10).

4. Dispositif de filtrage (2) selon l'une quelconque des revendications précédentes,
**caractérisé en ce que** l'évidement de remplissage (6) est réalisé en tant qu'une rainure qui présente en direction de l'axe longitudinal du piston à tamis (10) une modification de section transversale et/ou une section transversale sensiblement triangulaire.

5. Dispositif de filtrage (2) selon l'une quelconque des revendications précédentes,
**caractérisé en ce que** le support de tamis (10) est entraîné par un système d'entraînement (60) qui est réalisé en tant qu'entraînement électrique, en particulier en tant que moteur linéaire ou moteur pas à pas.

6. Dispositif de filtrage (2) selon l'une quelconque des revendications précédentes,
**caractérisé en ce que** le support de tamis (10) présente un capteur de position (58) pour définir la position du support de tamis (10), qui est réalisé de préférence en tant que capteur de déplacement Transsonar.

7. Dispositif de filtrage (2) selon l'une quelconque des revendications précédentes,
**caractérisé en ce que** le système de commande (30) présente une mémoire (56) et adapte, à partir de données de capteur mémorisées d'opérations de remplissage passées, des paramètres de régulation en particulier concernant des positions de remplissage et des vitesses d'avancement du support de tamis (10) et/ou des durées de remplissage de la cavité (18).

8. Dispositif de filtrage (2) selon l'une quelconque des revendications précédentes,
**caractérisé en ce que** le système de commande (30) présente une interface utilisateur (54) qui est réalisée en tant que panneau de commande et/ou en tant qu'écran sensible à l'effleurement.

9. Procédé (36) pour faire fonctionner un dispositif de filtrage (2) selon l'une quelconque des revendications 1 - 8 pour filtrer un fluide, où
- le support de tamis (10) est déplacé depuis une position de filtrage dans la position de changement de tamis,
- l'élément formant filtre (11) est retiré hors de la cavité (18) et un nouvel élément formant filtre (11) est inséré dans la cavité (18),
- la position et la vitesse d'avancement du support de tamis (10) sont réglées progressivement et de manière répétitive ou en continu au moyen du système de commande (30) et du système d'entraînement de telle sorte que l'évidement de remplissage (6) est amené en communication fluidique avec le canal d'entrée de fluide (14) et/ou le canal de sortie de fluide (16) pour remplir la cavité (18),
et la pression de fluide dans le canal d'entrée de fluide (14) et/ou dans le canal de sortie de fluide est maintenue dans des plages de pressions pouvant être définies pendant le remplissage de la cavité (18).

10. Procédé selon la revendication 9,
comprenant les étapes :
- d'avancement du support de tamis (10) dans une position de départ ;
- d'avancement continu du support de tamis (10) ou d'avancement progressif et répétitif du support de tamis (10) avec une vitesse d'avancement pouvant être définie,
- de maintien du support de tamis (10) dans une position d'avancement pouvant être définie jusqu'à ce que la cavité (18) soit totalement remplie.

11. Procédé (36) selon la revendication 9, comprenant les étapes :
- d'avancement du support de tamis (10) dans une position de départ ;
- de mesure de pression dans le canal d'entrée de fluide (14) et/ou le canal de sortie de fluide (16) et de mémorisation de l'au moins une valeur de pression ;
- d'avancement du support de tamis (10) d'une phase de cadence (22) ;
- de maintien dans ladite position pendant une pause de cadence ;
- de mesure de la pression de fluide dans le canal d'entrée de fluide (14) et/ou dans le canal de sortie de fluide (16) ;
- de comparaison de l'au moins une valeur de mesure à l'au moins une valeur de pression mémorisée.

12. Procédé (36) selon la revendication 9, avec les étapes supplémentaires :
- en cas d'absence d'une réduction de pression par rapport à la valeur de pression mémorisée :
- - d'avancement ultérieur du support de tamis (10) d'une phase de cadence (22) et de maintien dans ladite position pendant une pause de cadence ;
- - de répétition de l'étape ;
- en cas de réduction de pression après une pause de cadence par rapport à la valeur mémorisée de plus d'une valeur de limite :
- - de déplacement dans le sens inverse du support de tamis (10) d'un premier tronçon de poussée en sens inverse ;
- - de répétition de l'étape ;
- en cas de réduction de la pression après une pause de cadence par rapport à la valeur de pression mémorisée dans la valeur de limite, par ailleurs avec une étape suivante ;
- de maintien dans la position d'avancement concernée jusqu'à ce que la cavité (18) soit totalement remplie.

13. Procédé (36) selon la revendication 9, comprenant les étapes :
- d'avancement du support de tamis (10) dans une position de départ ;
- de mesure de la pression dans le canal d'entrée de fluide (14) et/ou dans le canal de sortie de fluide (16) et de mémorisation de l'au moins une valeur de pression ;
- d'avancement en continu du support de tamis (10) avec une vitesse d'avancement pouvant être définie ;
- de mesure en continu de la pression de fluide dans le canal d'entrée de fluide (14) et/ou le canal de sortie de fluide (16) ;
- de comparaison de l'au moins une valeur de mesure à l'au moins une valeur de pression mémorisée.

14. Procédé (36) selon l'une quelconque des revendications 9 à 13, comprenant par ailleurs l'étape :
- de mémorisation de la position d'avancement et d'utilisation de celle-ci même pour les passes de procédé suivantes.

15. Procédé (36) selon l'une quelconque des revendications 9 ou 10, dans lequel dans le cas de la réduction de pression, après une pause de cadence par rapport à la valeur de pression mémorisée de plus d'une valeur de limite, le procédé présente par ailleurs :
- la mesure de la pression de fluide dans le canal d'entrée de fluide (14) et/ou le canal de sortie de fluide (16) et la comparaison à l'au moins une valeur de pression mémorisée ;
- en cas de réduction de la pression après une pause de cadence par rapport à la valeur de pression mémorisée de plus de la valeur de limite :
- - le déplacement en sens inverse du support de tamis (10) d'un deuxième tronçon de poussée en sens inverse ;
- le déplacement dans la position de départ d'évacuation d'air et une nouvelle passe de procédé avec une phase de cadence réduite (22).
